# EUROPEAN PATENT APPLICATION

(11) **EP 3 836 682 A1**
(43) Date of publication of application: **16.06.2021**
(21) Application number: 19847019.7
(22) Date of filing: 26.06.2019
(51) Int. Cl.: H04W 72/04, H04L 1/18

(54) **METHOD FOR GENERATING SEMI-STATIC HARQ-ACK CODEBOOK, USER TERMINAL, AND READABLE STORAGE MEDIUM**

(30) Priority: 10.08.2018 CN 201810908042
(71) Applicant: Beijing Unisoc Communications Technology Co., Ltd., Beijing 100083 (CN)
(72) Inventor: ZHANG, Sa, Shanghai 201203 (CN)
(74) Representative: Maiwald Patent- und Rechtsanwaltsgesellschaft mbH
(86) International application number: PCT/CN2019/092978
(87) International publication number: WO 2020/029696

(57) **Abstract**

A method for generating a semi-static HARQ-ACK codebook, a user terminal, and a readable storage medium. The method comprises: receiving a PDSCH transmitted by a base station and a HARQ-ACK feedback time, the PDSCH transmitted by the base station being sent after the base station detects the success of LBT; generating a semi-static HARQ-ACK codebook during a current channel occupation duration according to the PDSCH transmitted by the base station and the HARQ-ACK feedback time, the semi-static HARQ-ACK codebook comprising a first sub-codebook and a second sub-codebook, wherein the first sub-codebook is used for the feedback of a HARQ-ACK, indicated in the HARQ-ACK feedback time, corresponding to the PDSCH for the last X timeslots in the previous channel occupation duration, and the second sub-codebook is used for the feedback of a HARQ-ACK, indicated in the HARQ-ACK feedback time, corresponding to a PDSCH for the time slot in the current channel occupation duration.

## Description

### CROSS-REFERENCE TO RELATED APPLICATIONS

This application claims the benefit of priority to Chinese Patent Application No. 201810908042.3, filed on August 10, 2018, and entitled "METHOD FOR GENERATING SEMI-STATIC HARQ-ACK CODEBOOK, USER TERMINAL, AND READABLE STORAGE MEDIUM", the entire disclosure of which is incorporated herein by reference.

### TECHNICAL FIELD

The present disclosure generally relates to radio communication field, and more particularly, to a method for generating a semi-static HARQ-ACK codebook, a user terminal and a readable storage medium.

### BACKGROUND

Hybrid Automatic Repeat reQuest (HARQ) is a technology that combines Forward Error Correction (FEC) and Automatic Repeat reQuest (ARQ) methods. By adding redundant information, FEC enables a receiver to correct some errors, thereby reducing the number of retransmissions. For errors that cannot be corrected by FEC, the receiver may request a transmitter to retransmit data through ARQ. The receiver uses an error detection code, generally a Cyclic Redundancy Check (CRC) code, to detect whether a received data packet is correct. If there is no error, the receiver may transmit a positive ACKnowledgement (ACK) to the transmitter. After receiving the ACK, the transmitter may transmit a next data packet. If there is an error, the receiver may discard the data packet and transmit a Negative ACKnowledgement (NACK) to the transmitter. After receiving the NACK, the transmitter may retransmit the same data.

New Radio (NR) supports multiple monitoring moments in one time slot, where a Physical Downlink Shared Channel (PDSCH) can be scheduled in each monitoring moment, and multiple PDSCHs can be scheduled in one time slot. Further, NR supports time domain resource allocation. When a PDSCH mapping type is Type B, each PDSCH may have 2, 4 or 7 OFDM symbols. There is no limit to a starting OFDM symbol of each PDSCH, thus, multiple PDSCHs can be transmitted in one slot. Accordingly, a HARQ-ACK feedback is required for multiple PDSCHs. A semi-static HARQ-ACK codebook needs to consider all possible situations (that is, a worst case) to determine the number of HARQ-ACK bits, so as to correctly feed back HARQ-ACK information of other PDSCHs when Downlink Control Information (DCI) is missed, which may cause a serious waste of PUCCH resources. Therefore, during a design of a semi-static HARQ-ACK codebook, codebook length should be reduced as much as possible.

Existing semi-static HARQ-ACK codebook designs take into account semi-static uplink and downlink configuration of cells, where a conflict between downlink scheduling and the semi-static uplink and downlink configuration of the cells is eliminated to reduce a size of the semi-static HARQ-ACK codebook. In addition, if a User Equipment (UE) does not report ability to receive multiple PDSCHs in one time slot, it is considered that the UE can merely receive one PDSCH in one time slot. Otherwise, the UE determines the maximum number of PDSCHs that possibly received in each time slot based on time domain resource configuration, so as to determine length of the semi-static HARQ-ACK codebook.

In existing techniques, the user terminal generates a corresponding semi-static HARQ-ACK codebook and feeds it back to the base station based on a HARQ-ACK feedback time (k1) received from the base station. However, due to the uncertainty of an unlicensed frequency band, k1 may indicate a flexible time rather than a definite time, which makes it difficult for the user terminal to generate and feed back a corresponding semi-static HARQ-ACK codebook based on a value of kl.

### SUMMARY

In embodiments of the present disclosure, a semi-static HARQ-ACK codebook may flexibly indicate a HARQ-ACK feedback time.

In an embodiment of the present disclosure, a method for generating a semi-static HARQ-ACK codebook is provided, including: receiving a PDSCH and a HARQ-ACK feedback time from a base station, wherein the PDSCH is transmitted after the base station detects that a Listen Before Talk (LBT) is successful; and generating the semi-static HARQ-ACK codebook in a current channel occupation time based on the PDSCH and the HARQ-ACK feedback time received from the base station, wherein the semi-static HARQ-ACK codebook inlcudes a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time.

Optionally, generating the semi-static HARQ-ACK codebook inlcudes: when it is learned from downlink control information received from the base station that the HARQ-ACK corresponding to the PDSCH of the last X time slots is fed back in another time slot, setting the HARQ-ACK corresponding to the PDSCH fed back in the another time slot to NACK in the first subcodebook.

Optionally, generating the semi-static HARQ-ACK codebook inlcudes: when it is detected that processing of the PDSCH of the time slot in the HARQ-ACK feedback time cannot be completed, setting the HARQ-ACK of the PDSCH of the time slot whose processing cannot be completed to NACK in the second subcodebook.

Optionally, after generating the semi-static HARQ-ACK codebook, the method further inlcudes: feeding back the semi-static HARQ-ACK codebook to the base station.

Optionally, the first subcodebook and the second subcodebook are sequentially arranged in a time sequence.

Optionally, a value of X is configured by the base station through high-level signaling.

Optionally, receiving the HARQ-ACK feedback time from the base station inlcudes: receiving downlink control information from the base station; and obtaining the HARQ-ACK feedback time from the downlink control information.

In an embodiment of the present disclosure, a user terminal is provided, including: a receiving circuitry configured to receive a PDSCH and a HARQ-ACK feedback time from a base station, wherein the PDSCH is transmitted after the base station detects that an LBT is successful; and a generating circuitry configured to generate the semi-static HARQ-ACK codebook in a current channel occupation time based on the PDSCH and the HARQ-ACK feedback time received from the base station, wherein the semi-static HARQ-ACK codebook inlcudes a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time.

Optionally, the generating circuitry is configured to: when it is learned from downlink control information received from the base station that the HARQ-ACK corresponding to the PDSCH of the last X time slots is fed back in another time slot, set the HARQ-ACK corresponding to the PDSCH fed back in the another time slot to NACK in the first subcodebook.

Optionally, the generating circuitry is configured to: when it is detected that processing of the PDSCH of the time slot in the HARQ-ACK feedback time cannot be completed, set the HARQ-ACK of the PDSCH of the time slot whose processing cannot be completed to NACK in the second subcodebook.

Optionally, the user terminal further inlcudes a feeding back circuitry configured to feed back the semi-static HARQ-ACK codebook to the base station.

Optionally, the first subcodebook and the second subcodebook are sequentially arranged in a time sequence.

Optionally, a value of X is configured by the base station through high-level signaling.

Optionally, the receiving circuitry is configured to: receive downlink control information from the base station; and obtain the HARQ-ACK feedback time from the downlink control information.

In an embodiment of the present disclosure, a computer readable storage medium having computer instructions stored therein is provided, wherein when the computer instructions are executed, any one of the above methods is performed.

In an embodiment of the present disclosure, a user terminal including a memory and a processor is provided, wherein the memory has computer instructions stored therein, and when the processor executes the computer instructions, any one of the above methods is performed.

Embodiments of the present disclosure may provide following advantages.

In embodiments of the present disclosure, a user terminal may generate a semi-static HARQ-ACK codebook based on a PDSCH and a HARQ-ACK feedback time received from the base station, wherein the semi-static HARQ-ACK codebook includes a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time. When the HARQ-ACK feedback time indicated by the base station is relatively flexible, the user terminal can still generate and feed back the corresponding semi-static HARQ-ACK codebook.

### BRIEF DESCRIPTION OF THE DRAWINGS

Figure 1 is a flow chart of a method for generating a semi-stati HARQ-ACK codebook according to an embodiment;
Figure 2 is a diagram of a Channel Occupation Time (COT) and a semi-stati HARQ-ACK codebook feedback according to an embodiment;
Figure 3 is a diagram of a COT and a semi-stati HARQ-ACK codebook feedback according to an embodiment; and
Figure 4 is a structural diagram of a user terminal according to an embodiment.

### DETAILED DESCRIPTION

In existing techniques, the user terminal generates a corresponding semi-static HARQ-ACK codebook and feeds it back to the base station based on a HARQ-ACK feedback time (k1) received from the base station. However, due to the uncertainty of an unlicensed frequency band, k1 may indicate a flexible time rather than a definite time, which makes it difficult for the user terminal to generate and feed back a corresponding semi-static HARQ-ACK codebook based on a value of k1.

In embodiments of the present disclosure, a user terminal may generate a semi-static HARQ-ACK codebook based on a PDSCH and a HARQ-ACK feedback time received from the base station, wherein the semi-static HARQ-ACK codebook includes a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time. When the HARQ-ACK feedback time indicated by the base station is relatively flexible, the user terminal can still generate and feed back the corresponding semi-static HARQ-ACK codebook.

In order to clarify the objects, characteristics and advantages of the disclosure, embodiments of present disclosure will be described in detail in conjunction with accompanying drawings.

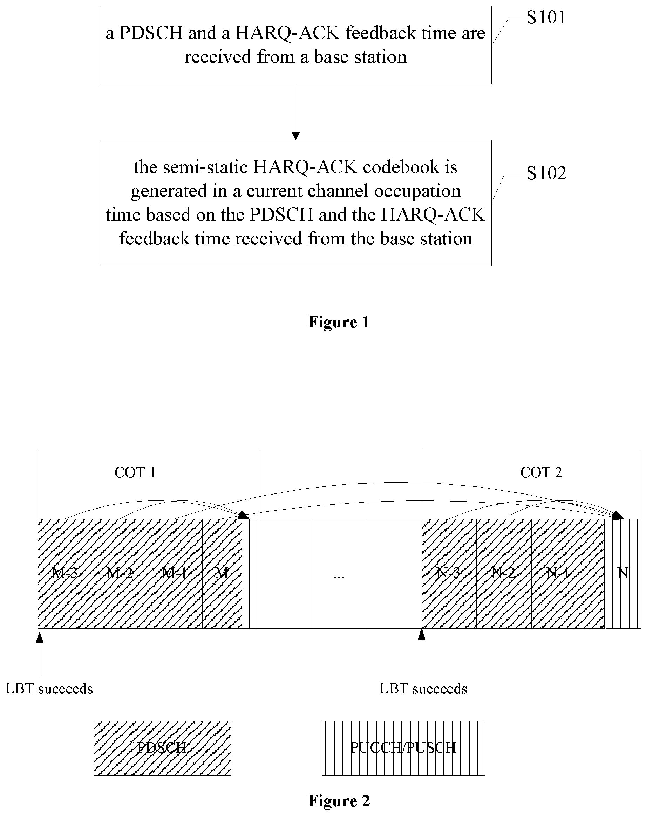

Figure 1 is a flow chart of a method for generating a semi-stati HARQ-ACK codebook according to an embodiment. Referring to Figure 1, the method may include S101 and S102.

In S101, a PDSCH and a HARQ-ACK feedback time are received from a base station.

In some embodiments, the base station may transmit the PDSCH to a user terminal and configure the HARQ-ACK feedback time for the user terminal after detecting that an LBT is successful.

In some embodiments, the base station may configure the HARQ-ACK feedback time for the user terminal through DCI, and transmit the DCI to the user terminal. The user terminal may receive the DCI from the base station, and obtain the HARQ-ACK feedback time configured by the base station from the DCI.

In S102, the semi-static HARQ-ACK codebook is generated in a current channel occupation time based on the PDSCH and the HARQ-ACK feedback time received from the base station.

In some embodiments, the semi-static HARQ-ACK codebook may include a first subcodebook and a second subcodebook, where the first subcodebook is used to feed back a HARQ-ACK corresponding to the PDSCH of last X time slots of a previous COT indicated in the HARQ-ACK feedback time, and the second subcodebook is used to feed back a HARQ-ACK corresponding to the PDSCH of a slot indicated in the current COT by the HARQ-ACK feedback time.

In some embodiments, a value of X is configured by the base station and transmitted to the user terminal through high-level signaling. After receiving the high-level signaling, the user terminal may obtain the value of X configured by the base station therein.

In practice, the value of X may be set according to practical application scenarios. For example, X=2 or X=4.

In some embodiments, during the generation of the semi-static HARQ-ACK codebook, if it is learned from the DCI received from the base station that the HARQ-ACK corresponding to the PDSCH of the last X time slots is fed back in another time slot, the HARQ-ACK corresponding to the PDSCH fed back in the another time slot is set to NACK in the first subcodebook.

For example, X=2. The last two slots are slot (M-1) and slot M in sequence. The base station indicates in the DCI that the HARQ-ACK corresponding to the PDSCH of slot (M-1) is fed back in another time slot, then in the first subcodebook, the HARQ-ACK corresponding to the PDSCH of slot (M-1) is set to NACK.

In some embodiments, during the generation of the semi-static HARQ-ACK codebook, if it is detected that processing of the PDSCH of the time slot in the HARQ-ACK feedback time cannot be completed, setting the HARQ-ACK of the PDSCH of the time slot whose processing cannot be completed to NACK in the second subcodebook.

For example, in the current COT, slot N is the last slot, and the base station instructs the user terminal to feed back the HARQ-ACK corresponding to the PDSCH of slot N. The user terminal feeds back a Physical Uplink Control Channel (PUCCH) to the base station in slot N. When the user terminal feeds back the PUCCH to the base station, it does not complete the processing of the PDSCH of slot N. Therefore, in the second subcodebook, the HARQ-ACK of the PDSCH corresponding to slot N is set to NACK.

In some embodiments, the user terminal may feed back its processing capability to the base station in advance. The base station may configure the corresponding HARQ-ACK feedback time for the user terminal based on the processing capability of the user terminal. If the HARQ-ACK feedback time configured by the base station for the user terminal exceeds the processing capability of the user terminal itself, when generating the second sub-codebook, the user terminal may set the HARQ-ACK of the PDSCH corresponding to the feedback time exceeding the processing capability of the user terminal to NACK.

In some embodiments, the first subcodebook and the second subcodebook may be arranged in a time sequence, that is, on a time axis, when receiving the semi-static HARQ-ACK codebook fed back by the user terminal, the base station first processes the first subcodebook, and then processes the second subcodebook.

By setting the first subcodebook before the second subcodebook, it is ensured that the semi-static HARQ-ACK codebook is arranged in the time sequence, so that the base station can perform corresponding processing.

In some embodiments, after generating the semi-static HARQ-ACK codebook, the user terminal may feed back the generated semi-static HARQ-ACK codebook to the base station.

The method for generating the semi-static HARQ-ACK codebook provided in the foregoing embodiments of the present disclosure is further described below by using specific examples.

Figure 2 is a diagram of a COT and a semi-stati HARQ-ACK codebook feedback according to an embodiment.

Referring to Figure 2, the base station is set to use a 15kHz Sub-Carrier Spacing (SCS) for downlink, and the PDSCH is configured with an additional Demodulation Reference Signal (DMRS). After receiving the last OFDM symbol of the PDSCH, the user terminal needs a processing time of 13 OFDM symbols to feed back the uplink HARQ-ACK. COT1 includes four slots, which are slot (M-3), slot (M-2), slot (M-1) and slot M in sequence, and COT2 includes four slots, which are slot (N-3), slot (N-2), slot (N-1) and slot N in sequence.

The base station configures the user terminal to use the semi-static HARQ-ACK codebook to feed back HARQ-ACK information of downlink data (that is, the PDSCH) through high-level signaling. In the high-level signaling, the base station configures X=2, that is, for COT1, the HARQ-ACK of the PDSCH corresponding to the last two slots (slot (M-1) and slot M) are fed back in COT2. For DCI format 1_0, a set of k1 is {1, 2, 3, 4}, and the value of k1 is the feedback time.

The user terminal does not report to the base station the ability to receive multiple PDSCHs in one slot, that is, the user terminal can merely receive one PDSCH in one slot.

During scheduling, for the PDSCH of slot (M-3), slot (M-2), slot (N-3) and slot (N-2), the base station indicates the determined value of k1 in the DCI. In this example, for slot (M-3), the corresponding value of k1 is 3; for slot(M-2), the corresponding value of k1 is 2; for slot (N-3), the corresponding value of k1 is 3; and for slot (N-2), the corresponding value of k1 is 2. For the PDSCH of slot (M-1) and slot M, the DCI merely indicates that the feedback is in the next COT, and does not indicate a definite time. At this time, the base station does not know a start time of the next COT, that is, the base station does not know the time when a next LBT is successful, and therefore cannot determine the corresponding value of k1 for the PDSCH of slot (M-1) and slot M.

In COT1, the user terminal feeds back the PUCCH to the base station in slot M. In slot M, the user terminal merely completes the processing of the PDSCH corresponding to slot (M-3) and the PDSCH corresponding to slot (M-2). Therefore, for the PUCCH fed back by the user terminal in slot M, the HARQ-ACK of the PDSCH corresponding to slot (M-3) and the HARQ-ACK of the PDSCH corresponding to slot (M-2) may be fed back to the base station.

For the PDSCH of slot (M-1) and the PDSCH of slot M, when the user terminal feeds back the PUCCH in slot M, as the processing of the PDSCH of slot (M-1) and the PDSCH of slot M have not been completed, the HARQ-ACK of the PDSCH of slot (M-1) and the HARQ-ACK of the PDSCH of slot M are fed back in the next COT (COT2).

After an LBT in the slot (N-3) succeeds, the base station continues to transmit the PDSCH to the user terminal. The user terminal feeds back the PUCCH to the base station in slot N. In slot N, the user terminal can complete the processing of the PDSCH received in slot (N-3) and slot (N-2). Therefore, when feeding back the PUCCH in slot N to the base station, the user terminal may feed back the HARQ-ACK of the PDSCH corresponding to slot (N-3) and the HARQ-ACK of the PDSCH corresponding to slot (N-2) to the base station.

For the PDSCH of slot (N-1) and the PDSCH of slot N, when the user terminal feeds back the PUCCH in slot N, as the processing of the PDSCH of slot (N-1) and the PDSCH of slot N have not been completed, the HARQ-ACK of the PDSCH of slot (N-1) and the HARQ-ACK of the PDSCH of slot N are fed back in the next COT.

For the semi-static HARQ-ACK codebook fed back in slot N, length of the first subcodebook is 2 bits, and length of the second subcodebook is 4 bits. For the first subcodebook, the first bit is used to feed back the HARQ-ACK of the PDSCH corresponding to slot (M-1), and the second bit is used to feed back the HARQ-ACK of the PDSCH corresponding to slot M. For the second subcodebook, the first bit is used to feed back the HARQ-ACK of the PDSCH corresponding to slot (N-4), where the HARQ-ACK of the PDSCH corresponding to slot (N-4) is NACK, the second bit is used for feed back the HARQ-ACK of the PDSCH corresponding to slot (N-3), the third bit is used to feed back the HARQ-ACK of the PDSCH corresponding to slot (N-2), and the fourth bit is used to feed back the HARQ-ACK of the PDSCH corresponding to slot (N-1), where the HARQ-ACK of the PDSCH corresponding to slot (N-1) is NACK. The first subcodebook is disposed before the second subcodebook, and the total length of the semi-static HARQ-ACK codebook is 6 bits.

Referring to Table 1, the semi-static HARQ-ACK codebook that the user terminal feeds back to the base station in slot N is illustrated.

**Table 1**

| codeword 1 | codeword 2 | codeword 3 | codeword 4 | codeword 5 | codeword 6 |
|---|---|---|---|---|---|
| HARQ-ACK of PDSCH in slot (M-1) | HARQ-ACK of PDSCH in slot M | NACK | HARQ-ACK of PDSCH in slot (N-3) | HARQ-ACK of PDSCH in slot (N-2) | NACK |

In Table 1, codewords 1 and 2 form a first subcodebook, and codewords 3 to 6 form a second sub-codebook.

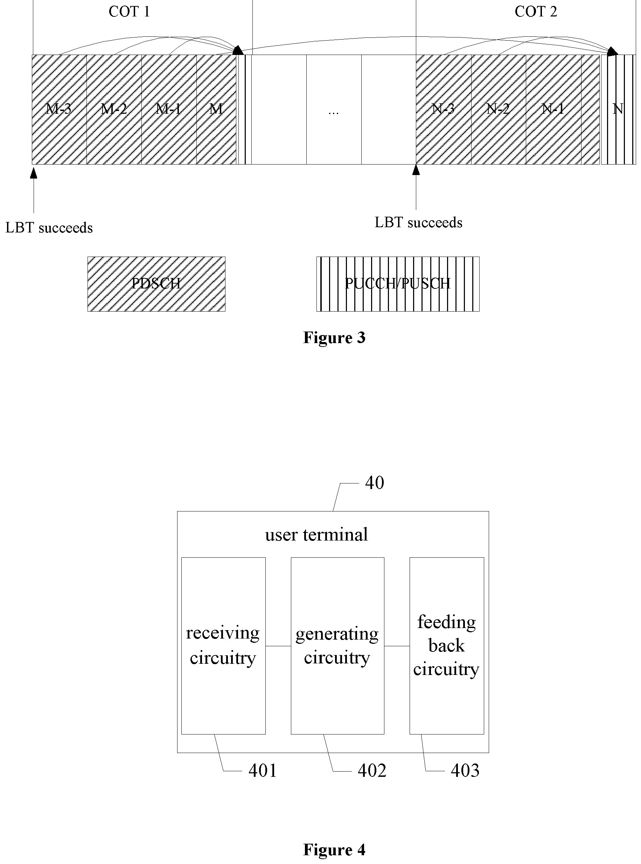

Figure 3 is a diagram of a COT and a semi-stati HARQ-ACK codebook feedback according to an embodiment.

Referring to Figure 3, it is assumed that the base station uses SCS of 15KHz for downlink, and merely front loaded DMRS is configured for PDSCH. After receiving the last OFDM symbol of the PDSCH, the user terminal needs a processing event of 8 OFDM symbols to feed back an uplink HARQ-ACK.

The base station configures the user terminal to use the semi-static HARQ-ACK codebook to feed back HARQ-ACK information of downlink data (that is, the PDSCH) through high-level signaling. In the high-level signaling, the base station configures X=2, that is, for COT1, the HARQ-ACK of the PDSCH corresponding to the last two slots (slot (M-1) and slot M) are fed back in COT2. For DCI format 1_0, a set of k1 is {1, 2, 3, 4}, and the value of k1 is the feedback time.

The user terminal does not report to the base station the ability to receive multiple PDSCHs in one slot, that is, the user terminal can merely receive one PDSCH in one slot.

During scheduling, for the PDSCH of slot (M-3), slot (M-2), slot (M-1), slot (N-3) and slot (N-2), the base station may indicate the determined value of k1 in the DCI. In this example, for slot (M-3), the corresponding value of k1 is 3; for slot (M-2), the corresponding value of k1 is 2; for slot (M-1), the corresponding value of k1 is 1; for slot (N-3), the corresponding value of k1 is 3; and for slot (N-2), the corresponding value of k1 is 2. For the PDSCH of slot M, the DCI merely indicates the feedback in the next COT, and does not indicate a definite time. At this time, the base station does not know a start time of the next COT, that is, the base station does not know the time when a next LBT is successful, and therefore cannot determine the value of k1 corresponding to the PDSCH of slot M.

In COT1, the user terminal feeds back the PUCCH to the base station in slot M. In slot M, the user terminal merely completes processing of the PDSCH corresponding to slot (M-3), the PDSCH corresponding to slot (M-2), and the PDSCH corresponding to slot (M-2). Therefore, for the PUCCH fed back by the user terminal in slot M, the HARQ-ACK of the PDSCH corresponding to slot (M-3), the HARQ-ACK of the PDSCH corresponding to slot (M-2), and the HARQ-ACK of the PDSCH corresponding to slot (M-1) may be fed back to base station.

For the PDSCH of slot M, when the user terminal feeds back the PUCCH in slot M, as the processing of the PDSCH of slot M is not completed, the HARQ-ACK of the PDSCH of slot M is fed back in the next COT (COT2).

After an LBT in slot (N-3) succeeds, the base station continues to transmit the PDSCH to the user terminal. The user terminal feeds back the PUCCH to the base station in slot N. In slot N, the user terminal may complete the processing of the PDSCH received in slot (N-3) and slot (N-2). Therefore, when feeding back the PUCCH to the base station in slot N, the user terminal may feed back the HARQ-ACK of the PDSCH corresponding to slot (N-3) and the HARQ-ACK of the PDSCH corresponding to slot (N-2) to the base station.

For the PDSCH of slot (N-1) and the PDSCH of slot N, when the user terminal feeds back the PUCCH in slot N, as the processing of the PDSCH of slot (N-1) and the PDSCH of slot N have not been completed, the HARQ-ACK of the PDSCH of slot (N-1) and the HARQ-ACK of the PDSCH of slot N are fed back in the next COT.

For the semi-static HARQ-ACK codebook fed back in slot N, length of the first subcodebook is 2 bits, and length of the second subcodebook is 4 bits. For the first subcodebook, the first bit is used to feed back the HARQ-ACK of the PDSCH corresponding to slot (M-1), and the second bit is used to feed back the HARQ-ACK of the PDSCH corresponding to slot M. As the PDSCH of slot (M-1) is indicated by DCI to be fed back in slot M, in the first subcodebook, the HARQ-ACK corresponding to the PDSCH of slot (M-1) is NACK.

For the second subcodebook, the first bit is used to feed back the HARQ-ACK of the PDSCH corresponding to slot (N-4), where the HARQ-ACK of the PDSCH corresponding to slot (N-4) is NACK, the second bit is used for feed back the HARQ-ACK of the PDSCH corresponding to slot (N-3), the third bit is used to feed back the HARQ-ACK of the PDSCH corresponding to slot (N-2), and the fourth bit is used to feed back the HARQ-ACK of the PDSCH corresponding to slot (N-1), where the HARQ-ACK of the PDSCH corresponding to slot (N-1) is NACK. The first subcodebook is disposed before the second subcodebook, and the total length of the semi-static HARQ-ACK codebook is 6 bits.

Referring to Table 2, the semi-static HARQ-ACK codebook that the user terminal feeds back to the base station in slot N is illustrated.

**Table 2**

| codeword 1 | codeword 2 | codeword 3 | codeword 4 | codeword 5 | codeword 6 |
|---|---|---|---|---|---|
| NACK | HARQ-ACK of PDSCH in slot M | NACK | HARQ-ACK of PDSCH in slot (N-3) | HARQ-ACK of PDSCH in slot (N-2) | NACK |

In Table 2, codewords 1 and 2 form a first subcodebook, and codewords 3 to 6 form a second sub-codebook.

Figure 4 is a structural diagram of a user terminal 40 according to an embodiment. Referring to Figure 4, the user terminal 40 may include a receiving circuitry 401, a generating circuitry 402 and a feeding back circuitry 403.

The receiving circuitry 401 is configured to receive a PDSCH and a HARQ-ACK feedback time from a base station, wherein the PDSCH is transmitted after the base station detects that an LBT is successful.

The generating circuitry 402 is configured to generate the semi-static HARQ-ACK codebook in a current channel occupation time based on the PDSCH and the HARQ-ACK feedback time received from the base station, wherein the semi-static HARQ-ACK codebook inlcudes a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time.

In some embodiments, the generating circuitry 402 is configured to: when it is learned from downlink control information received from the base station that the HARQ-ACK corresponding to the PDSCH of the last X time slots is fed back in another time slot, set the HARQ-ACK corresponding to the PDSCH fed back in the another time slot to NACK in the first subcodebook.

In some embodiments, the generating circuitry 402 is configured to: when it is detected that processing of the PDSCH of the time slot in the HARQ-ACK feedback time cannot be completed, set the HARQ-ACK of the PDSCH of the time slot whose processing cannot be completed to NACK in the second subcodebook.

In some embodiments, the user terminal 40 further inlcudes the feeding back circuitry 403 configured to feed back the semi-static HARQ-ACK codebook to the base station.

In some embodiments, the first subcodebook and the second subcodebook are sequentially arranged in a time sequence.

In some embodiments, a value of X is configured by the base station through high-level signaling.

In some embodiments, the receiving circuitry 401 is configured to: receive downlink control information from the base station; and obtain the HARQ-ACK feedback time from the downlink control information.

In an embodiment of the present disclosure, a computer readable storage medium having computer instructions stored therein is provided, wherein when the computer instructions are executed, any one of the above methods is performed.

In an embodiment of the present disclosure, a user terminal including a memory and a processor is provided, wherein the memory has computer instructions stored therein, and when the processor executes the computer instructions, any one of the above methods is performed.

Those skilled in the art could understand that all or parts of the steps in the various methods of the above-mentioned embodiments may be completed by a program instructing relevant hardware, and the program may be stored in any computer-readable storage medium. The storage medium may include a Read Only Memory (ROM), a Random Access Memory (RAM), a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for generating a semi-static Hybrid Automatic Repeat reQuest-ACKnowledgement (HARQ-ACK) codebook, comprising:
receiving a Physical Downlink Shared CHannel (PDSCH) and a HARQ-ACK feedback time from a base station, wherein the PDSCH is transmitted after the base station detects that a Listen Before Talk (LBT) is successful; and
generating the semi-static HARQ-ACK codebook in a current channel occupation time based on the PDSCH and the HARQ-ACK feedback time received from the base station,
wherein the semi-static HARQ-ACK codebook comprises a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time.

2. The method according to claim 1, wherein generating the semi-static HARQ-ACK codebook comprises:
when it is learned from downlink control information received from the base station that the HARQ-ACK corresponding to the PDSCH of the last X time slots is fed back in another time slot, setting the HARQ-ACK corresponding to the PDSCH fed back in the another time slot to NACK in the first subcodebook.

3. The method according to claim 1, wherein generating the semi-static HARQ-ACK codebook comprises:
when it is detected that processing of the PDSCH of the time slot in the HARQ-ACK feedback time cannot be completed, setting the HARQ-ACK of the PDSCH of the time slot whose processing cannot be completed to NACK in the second subcodebook.

4. The method according to claim 1, wherein after generating the semi-static HARQ-ACK codebook, the method further comprises:
feeding back the semi-static HARQ-ACK codebook to the base station.

5. The method according to claim 1, wherein the first subcodebook and the second subcodebook are sequentially arranged in a time sequence.

6. The method according to claim 1, wherein a value of X is configured by the base station through high-level signaling.

7. The method according to claim 1, wherein receiving the HARQ-ACK feedback time from the base station comprises:
receiving downlink control information from the base station; and
obtaining the HARQ-ACK feedback time from the downlink control information.

8. A user terminal, comprising:
a receiving circuitry configured to receive a Physical Downlink Shared CHannel (PDSCH) and a Hybrid Automatic Repeat reQuest-ACKnowledgement (HARQ-ACK) feedback time from a base station, wherein the PDSCH is transmitted after the base station detects that a Listen Before Talk (LBT) is successful; and
a generating circuitry configured to generate the semi-static HARQ-ACK codebook in a current channel occupation time based on the PDSCH and the HARQ-ACK feedback time received from the base station,
wherein the semi-static HARQ-ACK codebook comprises a first subcodebook and a second subcodebook, the first subcodebook is used to feed back a HARQ-ACK corresponding to the PDSCH of last X time slots of a previous channel occupation time indicated in the HARQ-ACK feedback time, and the second subcodebook is used to feed back a HARQ-ACK corresponding to the PDSCH of a slot indicated in the current channel occupation time by the HARQ-ACK feedback time.

9. The user terminal according to claim 8, wherein the generating circuitry is configured to:
when it is learned from downlink control information received from the base station that the HARQ-ACK corresponding to the PDSCH of the last X time slots is fed back in another time slot, set the HARQ-ACK corresponding to the PDSCH fed back in the another time slot to NACK in the first subcodebook.

10. The user terminal according to claim 8, wherein the generating circuitry is configured to:
when it is detected that processing of the PDSCH of the time slot in the HARQ-ACK feedback time cannot be completed, set the HARQ-ACK of the PDSCH of the time slot whose processing cannot be completed to NACK in the second subcodebook.

11. The user terminal according to claim 8, further comprising a feeding back circuitry configured to:
feed back the semi-static HARQ-ACK codebook to the base station.

12. The user terminal according to claim 8, wherein the first subcodebook and the second subcodebook are sequentially arranged in a time sequence.

13. The user terminal according to claim 8, wherein a value of X is configured by the base station through high-level signaling.

14. The user terminal according to claim 8, wherein the receiving circuitry is configured to:
receive downlink control information from the base station; and
obtain the HARQ-ACK feedback time from the downlink control information.

15. A computer readable storage medium having computer instructions stored therein, wherein when the computer instructions are executed, the method of any one of claims 1 to 7 is performed.

16. A user terminal comprising a memory and a processor, wherein the memory has computer instructions stored therein, and when the processor executes the computer instructions, the method of any one of claims 1 to 7 is performed.
